# EUROPÄISCHE PATENTSCHRIFT

(11) **EP 1 710 361 B1**
(45) Veröffentlichungstag und Bekanntmachung des Hinweises auf die Patenterteilung: **25.07.2007**
(21) Anmeldenummer: 05007211.5
(22) Anmeldetag: 01.04.2005
(51) Int. Cl.: E03F 5/04

(54) **Mehrstufige Filterpatrone zum Einsetzen in Strassenabläufe**
Multistepped filter cartridge for street gullies
Cartouche filtrante à plusieurs étages pour bouche d'égout

(43) Veröffentlichungstag der Anmeldung: 11.10.2006
(73) Patentinhaber: Ingenieurgesellschaft Prof. Dr.-Sieker mbH, 15366 Hoppegarten (DE)
(72) Erfinder: Sieker, Friedhelm, Prof. Dr., 30926 Seelze (DE); Sieker, Heiko, Dr., 15366 Hoppengarten (DE)
(74) Vertreter: Scholz, Hartmut

(56) Entgegenhaltungen:
- WO-A-20/04022864
- DE-A1- 10 127 553
- US-A- 5 507 944
- US-A1- 2004 251 185

## Beschreibung

Die Erfindung betrifft einen Filtereinsatz für Straßeneinläufe zur Aufnahme und Ableitung von Oberflächenwasser, mit einer mehrstufigen Filteranordnung.

Die Behandlung, nämlich die Reinigung von Oberflächenwasser, insbesondere von Regenwasser, das von Straßenland abgeleitet werden muss, wird wasserwirtschaftlich immer notwendiger. Dieses betrifft insbesondere die Abflüsse von Straßen und hier insbesondere jene Abflüsse, die in Gewässer mit besonderen Anforderungen eingeleitet werden.

Als Behandlungsverfahren sind heute Bodenfilterbecken mit oder ohne vorgeschalteter Sedimentationsstufe im Einsatz. Bodenfilterbecken sind insbesondere dann günstig, wenn eine Beschickung im freien Gefälle, also ohne Pumpwerk, möglich ist und eine genügend große Fläche an geeigneter Stelle zur Verfügung steht. Sind diese günstigen Voraussetzungen nicht gegeben, kommen als Alternative dezentrale Maßnahmen in Betracht, die in verschiedenen Ausführungsvarianten des Mulden-Rigolen-Prinzips beispielsweise aus der DE 101 14 053 A1 bekannt sind. Letztere haben jedoch den Nachteil, dass sie in Bestandsgebieten nachträglich schwerlich und nur unter hohen Kosten zu realisieren sind.

So sind Straßeneinläufe bekannt, die im Sinne des Trennsystems über Regenwasserkanäle direkt an oberirdische Gewässer angeschlossen sind. Problematisch dabei ist, dass Verschmutzungen, die sich in den Trockenzeiten auf den Straßenflächen ansammeln, in die Straßeneinlauf- oder Gullyschächte gespült und von hier aus über die Regenwasserkanäle direkt und unbehandelt in die Gewässer gelangen. Zur Abhilfe sind beispielsweise aus der DE 101 27 553 A1 oder der DE 195 33 935 C2 verschiedene Filtersysteme bekannt. Diese Filtersysteme weisen jedoch einen relativ geringen Durchsatz auf und sind sehr Wartungsintensiv. Ein Filtersystem in Form einer Filterkartusche ist aus den Dokumenten US 5 507 944 A und WO 2004/022864 A bekannt gewerden.

Aufgabe der vorliegenden Erfindung ist es, einen Filtereinsatz für Straßeneinläufe der eingangs beschriebenen Art zu schaffen, mit dem bei hohem Durchsatz und geringem Wartungsaufwand eine gute Rückhaltung von Verschmutzungen und Grobstoffen erzielt werden kann.

Gelöst wird diese Aufgabe dadurch, dass die einzelnen Filter der mehrstufigen Filteranordnung von dem eingeleiteten Wasser hintereinander abwechselnd gegenläufig radial durchströmbar sind.

Bei einem Ausführungsbeispiel wird dies durch eine Filterkartusche erzielt, in der unter Bildung eines inneren, unten geschlossenen Ringraumes ein mit einem geschlossenen Boden versehener Grobstoffrückhaltefilter und darunter ein mit einem gelochten Boden versehener Feinstoffrückhaltefilter angeordnet sind.

Durch diese Anordnung der Filtereinsätze wird das in den oberen Grobstoffrückhaltefilter einlaufende Oberflächenwasser radial nach außen in den inneren Ringraum der Filterkartusche geführt und läuft nach unten ab. Am Boden der Filterkartusche staut es sich und wird gegenläufig radial nach innen durch den Feinstoffrückhaltefilter zurückgeführt. Durch diese Maßnahmen wird ein Filtereinsatz geschaffen, bei dem ein hoch wirksamer Grobstoffrückhalt von hoher Durchsatzkapazität gewährleistet ist.

Zur weiteren Verbesserung der Filterleistung und zur Verringerung des Wartungsaufwandes ist es vorgesehen, dass die Filterwandung des Feinstoffrückhaltefilters mit Oberflächenvergrößerungen versehen ist. Insbesondere sind diese Oberflächenvergrößerungen als vertikal verlaufende Falten oder Wellen der äußeren Filterwandung ausgebildet. Durch diese Vergrößerung der Oberfläche werden die notwendigen Reinigungs- und Wartungsintervalle vergrößert und damit die Betriebskosten erheblich verringert.

Weitere vorteilhafte Maßnahmen sind in den Unteransprüchen beschrieben. Die Erfindung ist in der beiliegenden Zeichnung dargestellt und wird nachfolgend näher beschrieben; es zeigt:
- **Figur 1**: den senkrechten Schnitt durch einen Straßeneinlauf, mit eingesetzter Filterkartusche, mit Grobstoffrückhaltefilter und darunter angeordnetem Feinstoffrückhaltefilter;
- **Figur 2**: die Detaildarstellung einer Filterkartusche nach Fig. 1, mit im Bereich der Wassereinlauföffnung angeordnetem Grobstoffrückhaltefilter und darunter angeordnetem Feinstoffrückhaltefilter;
- **Figur 3**: den Schnitt durch einen Grobstoffrückhaltefilter entlang der Linie A - A' in der Figur 2, mit von Stegen gehaltenen Grobfilterflächen;
- **Figur 4**: den Schnitt durch einen Feinstoffrückhaltefilter entlang der Linie B - B' in der Figur 2, mit Oberflächenvergrößerungen durch vertikal verlaufende Faltungen der Filterwandung.

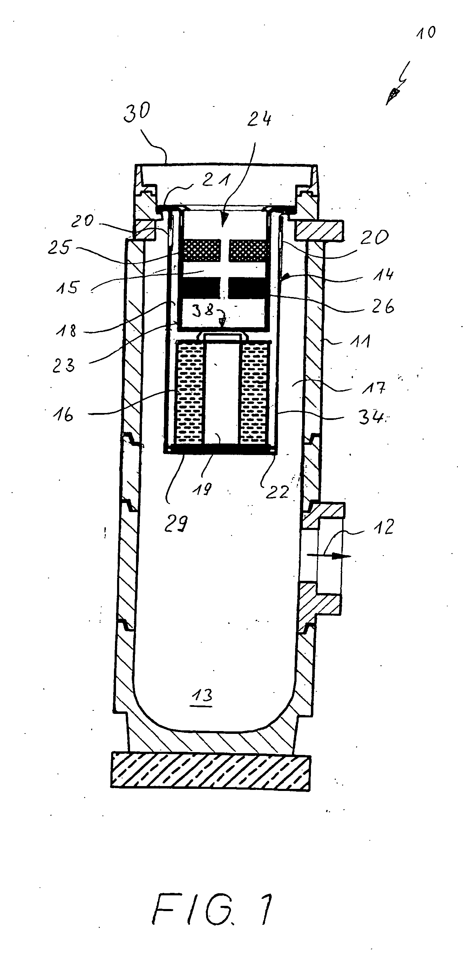

Der in der Figur 1 schematisch dargestellte Straßeneinlauf 10 weist eine Schachtwand 11 auf, die im Wesentlichen aus über einander gestellten ringförmigen Betonfertigteilen besteht. Nach unter ist der Straßeneinlauf 10 durch einen trogförmigen Schlammsammelraum 13 abgeschlossen. Oberhalb des Schlammsammelraums 13 ist eine Kanalisationszulauf 12 vorgesehen, die in eine nicht näher dargestellte Kanalisation führt. Nach oben ist der Straßeneinlauf 10 offen und mit einem Einlaufaufsatz 30 abgedeckt.

In den Straßeneinlauf 10 ist eine Filterkartusche 14 eingehängt. Die Filterkartusche 14 ist unter Bildung eines äußeren Ringraumes 17 mit seitlichen oder rundum laufenden Aufhängungen 21 in den Straßeneinlauf 10 eingehängt. Sie weist eine obere Einlauföffnung 24 auf, durch die das abzuleitende Oberflächenwasser in die Filterkartusche 14 gelangt.

Im Bereich der Aufhängungen 21 sind Umflutöffnungen 20 vorgesehen, durch die bei zu hohem Anfall das Oberflächenwasser radial nach außen direkt in den äußeren Ringraum 17 abgeleitet wird.

In die Filterkartusche 14 ist unter Bildung eines inneren Ringraumes 18 ein Grobstoffrückhaltefilter 15 eingesetzt. Der Grobstoffrückhaltefilter 15 ist korbförmig ausgebildet und mit einem geschlossenen Korbboden 38 versehen.

Unterhalb des Grobstoffrückhaltefilters 15 ist ein Feinstoffrückhaltefilter 16 in die Filterkartusche 14 eingesetzt. Der Feinstoffrückhaltefilter 16 ist ebenfalls korbförmig ausgebildet und mit einem gelochten Korbboden 29 versehen. Er weist einen unten offenen Ablauf 19 auf, der in den Schlammsammelraum 13 führt. Der Ablauf 19 ist in dem Feinstoffrückhaltefilter 16 vorzugsweise zentrisch angeordnet.

Im Bereich seines gelochten Korbbodens 29 ist der Feinstoffrückhaltefilter 16 gegenüber der Wandung 34 der Filterkartusche 14 mit einem Dichtring 22 abgedichtet. Der Dichtring 22 schließt den inneren Ringraum 18 nach unten ab.

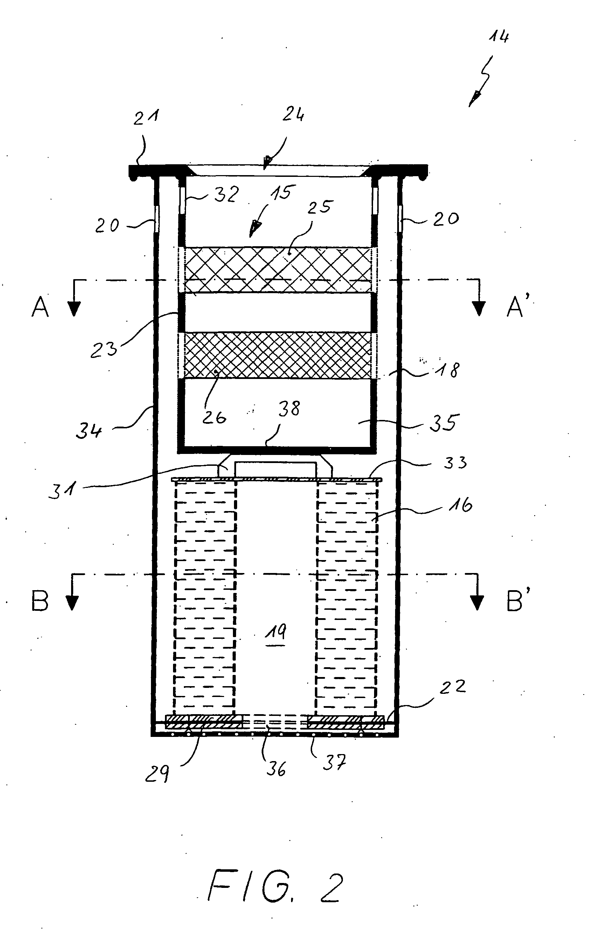

Wie die Figur 2 zeigt, weist die Wandung 23 des Grobstoffrückhaltefilters 15 eine Grobfilterfläche 25 und eine Feinfilterfläche 26 auf. Die Grobfilterfläche 25 ist oberhalb der Feinfilterfläche 26 vorgesehen, und sie weisen unterschiedliche Maschenweiten auf. Im Bereich der Einlauföffnung 24 ist der Grobstoffrückhaltefilter 15 mit Überläufen 32 versehen, durch die bei zu hohem Abfall das einlaufende Regenwasser - wenn auch ungefiltert - in den inneren Ringraum 18 ablaufen kann.

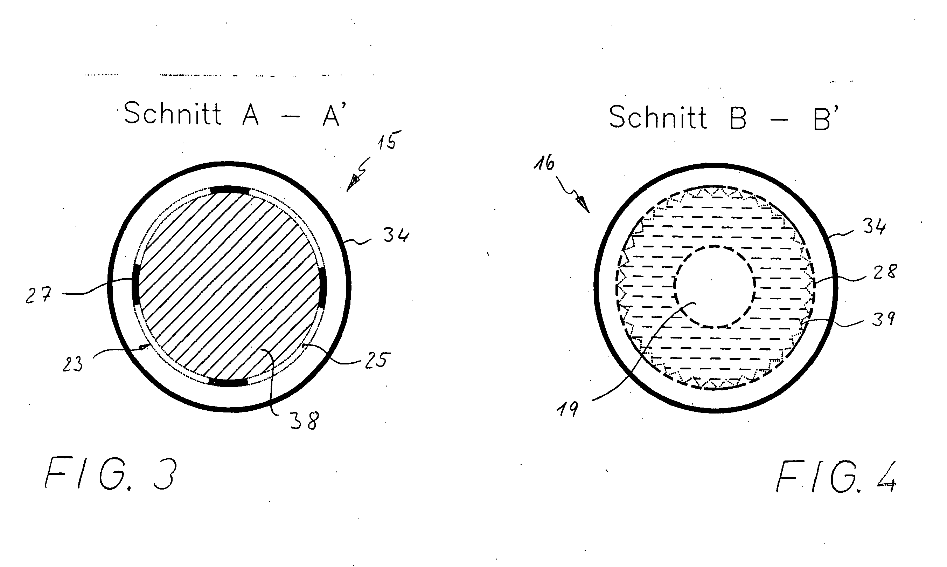

Die Filterflächen 25 und 26 können rundum durchgehend ausgebildet oder, wie die Figur 3 im Schnitt zeigt, durch senkrecht verlaufende Haltestege 27 unterbrochen sein. Unterhalb der Feinfilterflächen 26 ist ein Absetzraum 35 vorgesehen, in dem sich bei Beruhigung des einlaufenden Regenwassers sandige Mitführungen absetzen können.

Der Feinstoffrückhaltefilter 16 ist an seiner Oberseite mit einer geschlossenen Abdeckfläche 33 versehen. An der Abdeckfläche 33 ist ein Haltegriff 31 befestigt, an dem der Feinstoffrückhaltefilter 16 zu Wartungszwecken leicht aus der Filterkartusche 14 heraus gehoben werden kann. Der Korbboden 29 des Feinstoffrückhaltefilters 16 ist im Bereich des zentrischen Ablaufs 19 mit Ablauföffnungen 36 versehen, und unterhalb des Feinstoffrückhaltefilters 16 ist die Filterkartusche 14 mit Kartuschenöffnungen 37 versehen.

Wie die Figur 4 zeigt, ist die Filterwandung 28 des Feinstoffrückhaltefilters 16 mit einer Vielzahl von vertikal verlaufenden Faltungen 39 versehen. An Stelle der Faltungen 39 kann die Filterwandung 28 auch mit Wellen versehen sein. Die Filterflächen 25 und 26 des Grobstoffrückhaltefilters 15 können mit ebensolchen Faltungen oder Wellen 39 versehen sein.

Durch die Faltungen oder Wellen 39 wird die Oberfläche der Filterwandung 28 wesentlich vergrößert. Die Vergrößerung der Filterwandung 28 kann bis zu einer Verdoppelung der vorhandenen Filterfläche reichen.

Die Funktion des erfindungsgemäßen Straßeneinlaufs 10 anhand der vorstehenden Beschreibung nachfolgend näher beschrieben.

Derartige Straßeneinläufe 10 werden üblicherweise im Bereich der Bordsteine von Straßen angelegt und sollen Oberflächenwasser von Straßen ablaufen lassen.

Das Oberflächenwasser gelangt durch die Einlauföffnung 24 zunächst in den oberen, topfförmig ausgebildeten Grobstoffrückhaltefilter 15 und wird in dem Absetzraum 35 gesammelt. Steigt es dann auf so läuft es im Wesentlichen in horizontaler Richtung radial nach außen ab. Dabei werden mitgeführte grobe Fremdstoffe von den Filterflächen 25 und 26 zurück gehalten.

Nach dieser Grobreinigung gelangt das Wasser radial nach außen in den inneren Ringraum 18, wo es weiter nach unter abfließt. In dem inneren Ringraum 18 wird es von dem unten angeordneten Dichtring 22 gestaut und steigt bis in den Bereich des Feinstoffrückhaltefilters 16 auf. Hier wird es im Wesentlichen radial zurück nach innen in den Feinstoffrückhaltefilter 16 geleitet. Es gelangt durch den Feinstoffrückhaltefilter 16 bis in den zentrischen Ablauf 19, wo es vertikal nach unten bis in den Schlammsammelraum 13 gelangt. Hier steigt das Wasser dann auf und wird durch den Kanalisationszulauf 12 in eine beliebige, nicht dargestellte Kanalisation, abgeleitet.

Bei zu hohem Anfall von Oberflächenwasser kann dieses durch die Umflutöffnungen 20 an dem oberen Grobstoffrückhaltefilter 15 vorbei direkt in den äußeren Ringraum 17 zwischen der Wandung 34 der Filterkartusche 14 und der Schachtwand 11 eingeleitet werden. Die Umflutöffnungen 20 sind so gestellt, dass zumindest die gröbsten Grobstoffe hier zurückgehalten werden. Schlamm und sandige Mitführungen werden in dem Schlammsammelraum 13 des Straßeneinlaufes 10 gesammelt.

Durch diese Maßnahmen wird ein effektives mehrstufiges Filtersystem geschaffen, bei dem die Grobstoffe aus dem Grobstoffrückhaltefilter 15 relativ schnell entfernt werden können. Die Reinigungsintervalle für den darunter liegenden Feinstoffrückhaltefilter 16 können aufgrund seiner durch die Faltungen 39 wesentlich vergrö-ßerten Filterwandung 28 erheblich verlängert werden. Die Betriebskosten für derartige Straßeneinläufe 10 können dadurch wesentlich gesenkt werden.

Der Feinstoffrückhaltefilter 16 kann auch mit einem Filtermaterial gefüllt sein, das vorzugsweise aus Sand und/oder Kies besteht, die mit Eisenspänen vermengt sind. Die Eisenspäne dienen dazu, beispielsweise Phosphate chemisch zu binden, während in dem Sand- oder Kiesmaterial weitere Feinanteile zurückgehalten werden.

Zum Reinigen kann der Feinstoffrückhaltefilter 16 aus der Filterkartusche 14 heraus gehoben und ausgespült und/oder regeneriert werden, während das Grobmaterial leicht mechanisch aus dem Grobstoffrückhaltefilter 15 entfernt werden kann.

### Bezugszeichen

- 10: Straßeneinlauf
- 11: Schachtwand
- 12: Kanalisationszulauf
- 13: Schlammsammelraum
- 14: Filterkartusche
- 15: Grobstoffrückhaltefilter
- 16: Feinstoffrückhaltefilter
- 17: äußerer Ringraum
- 18: innerer Ringraum
- 19: zentrischer Ablauf
- 20: Umflutöffnung
- 21: Aufhängung
- 22: Dichtring
- 23: Wandung
- 24: Einlauföffnung
- 25: Grobfilterfläche
- 26: Feinfilterfläche
- 27: Haltesteg
- 28: Filterwandung
- 29: gelochter Korbboden
- 30: Einlaufaufsatz
- 31: Haltegriff
- 32: Überlauf
- 33: Abdeckfläche
- 34: Wandung
- 35: Absetzraum
- 36: Ablauföffnung
- 37: Kartuschenöffnungen
- 38: geschlossener Korbboden
- 39: Faltung/Wellung

## Patentansprüche

1. Filtereinsatz für Straßeneinläufe zur Aufnahme und Ableitung von Oberflächenwasser, mit einer mehrstufigen Filteranordnung in Form einer Filterkartusche (14), wobei die einzelnen Filter (15, 16) der mehrstufigen Filteranordnung von dem eingeleiteten Wasser hintereinander abwechselnd gegenläufig radial durchströmbar sind, **dadurch gekennzeichnet, dass** in die Filterkartusche (14) unter Bildung eines inneren, unten geschlossenen Ringraumes (18) ein mit einem geschlossenen Boden (38) versehener Grobstoffrückhaltefilter (15) und darunter ein mit einem gelochten Boden (29) versehener Feinstoffrückhaltefilter (16) eingesetzt sind.

2. Filtereinsatz nach Anspruch 1, **dadurch gekennzeichnet, dass** die Filterwandung (28) des Feinstoffrückhaltefilters (16) mit Oberflächenvergrößerungen (39) versehen ist.

3. Filtereinsatz nach Anspruch 2, **dadurch gekennzeichnet, dass** die Oberflächenvergrößerungen der Filterwandung (28) des Feinstoffrückhaltefilters (16) vertikal verlaufende Faltungen oder Wellen (39) sind.

4. Filtereinsatz nach den Ansprüchen 1 bis 3, **dadurch gekennzeichnet, dass** der Feinstoffrückhaltefilter (16) mit einem Gemisch aus Kies, Sand und/oder Eisenspänen füllbar ist.

5. Filtereinsatz nach Anspruch 1, **dadurch gekennzeichnet, dass** der Grobstoffrückhaltefilter (15) mit einer Grobfilterfläche (25) und einer Feinfilterfläche (26) versehen ist, und eingeleitetes Wasser radial nach außen in den inneren Ringraum (18) der Filterkartusche (14) strömbar ist.

6. Filtereinsatz nach den Ansprüchen 1 bis 4, **dadurch gekennzeichnet, dass** der innere Ringraum (18) der Filterkartusche (14) im Bereich des Feinstoffrückhaltefilter (16) an seinem in Einbaulage unteren Ende mit einem rundum laufenden Haltering (22) abgedichtet ist.

7. Filtereinsatz nach den Ansprüchen 1 bis 4 und Anspruch 6, **dadurch gekennzeichnet, dass** der Feinstoffrückhaltefilter (16) eine geschlossene obere Abdeckfläche (33) und einen unten offenen Ablauf (19) aufweist und die Abdeckfläche (33) mit einem Haltegriff (31) versehen ist.

8. Filtereinsatz nach den Ansprüchen 1 bis 4 und den Ansprüchen 6 und 7, **dadurch gekennzeichnet, dass** die Filterkartusche (14) unter Bildung eines äußeren Ringraumes (17) mit einer Aufhängung (21) in einen Straßeneinlauf (10) einhängbar ist und im Bereich ihrer Aufhängung (21) mit in den äußeren Ringraum (17) führenden Umflutöffnungen (20) versehen ist.

## Claims

1. Filter insert for road drains adapted to receive and drain off surface water, the insert comprising a multi-stage filtering assembly in the form of a filter cartridge (14), with the incoming water sequentially passing through the various filters (15, 16) of the multi-stage filtering assembly in alternating opposite radial directions, **characterized by** filter cartridge (14) having inserted therein a coarse material retaining filter (15) having a non-perforate bottom wall, as well as therebelow a fine material retaining filter (16) having a perforated bottom wall (29), said filters forming an inner annular space (18) closed at the bottom end thereof.

2. Filter insert as in claim 1, **characterized by** filter wall (28) of fine material retaining filter (16) being provided with surface area enlarging means (39).

3. Filter insert as in claim 2, **characterized by** said surface area enlarging means of filter wall (28) of fine material retaining filter (16) comprising vertically extending pleats or corrugations (39).

4. Filter insert as in claims 1 to 3, **characterized by** fine material retaining filter (16) being adapted to be filled with a mixture of gravel, sand and/or iron chips.

5. Filter insert as in claim 1, **characterized by** coarse material retaining filter (15) being provided with a coarse filter surface (25) and a fine filter surface (26), said filter being adapted to direct received water in radially outward directions into said inner annular space (18) of filter cartridge (14).

6. Filter insert as in claims 1 to 4, **characterized in that**, in the installed condition, inner annular space (18) of filter cartridge (14) is sealed at its bottom end in the area of fine material retaining filter (16) by means of an annular holding ring (22).

7. Filter insert as in claims 1 to 4 and 6, **characterized by** fine material retaining filter (16) having a closed top cover (33) and a discharge space (19) open at the bottom, with said top cover (33) having handle means mounted thereon.

8. Filter insert as in claims 1 to 4, 6 and 7, **characterized by** filter cartridge (14) being adapted to be suspended inside a road drain (10) by suspension means (21) so as to form an outer annular space (17) and having in the area of suspension means (21) overflow openings (20) opening into said outer annular space (17).

## Revendications

1. Filtre de rechange pour bouches d'égout destiné à recevoir et à évacuer l'eau de surface, muni d'un arrangement filtrant à plusieurs étages sous la forme d'une cartouche filtrante (14), les divers filtres (15, 16) de l'arrangement filtrant à plusieurs étages pouvant être traversés radialement les uns après les autres à tour de rôle en sens contraire par l'eau introduite, **caractérisé en ce que** sont utilisés, dans la cartouche filtrante (14), avec formation d'un espace annulaire (18) intérieur fermé en dessous, un filtre de rétention de grosses particules (15) pourvu d'un fond (38) fermé et, situé au-dessous dudit filtre, un filtre de rétention de fines particules (16) pourvu d'un fond perforé (29).

2. Filtre de rechange selon la revendication 1, **caractérisé en ce que** la paroi filtrante (28) du filtre de rétention de fines particules (16) est pourvue d'agrandissements superficiels (39).

3. Filtre de rechange selon la revendication 2, **caractérisé en ce que** les agrandissements superficiels de la paroi filtrante (28) du filtre de rétention de fines particules (16) sont des plissements ou des ondulations s'étendant verticalement.

4. Filtre de rechange selon les revendications 1 à 3, **caractérisé en ce que** le filtre de rétention de fines particules (16) peut être rempli d'un mélange constitué de gravier, de sable et/ou de copeaux de fer.

5. Filtre de rechange selon la revendication 1, **caractérisé en ce que** le filtre de rétention de grosses particules (15) est pourvu d'une surface filtrante à maillage gros (25) et d'une surface filtrante à maillage fin (26), et **en ce que** l'eau introduite peut s'écouler radialement vers l'extérieur dans l'espace annulaire intérieur (18) de la cartouche filtrante (14).

6. Filtre de rechange selon les revendications 1 à 4, **caractérisé en ce que** l'espace annulaire intérieur (18) de la cartouche filtrante (14) est étanchéifié dans la zone du filtre de rétention de fines particules (16) au niveau de son extrémité inférieure en position de montage à l'aide d'une bague de maintien (22) circulaire.

7. Filtre de rechange selon les revendications 1 à 4 et la revendication 6, **caractérisé en ce que** le filtre de rétention de fines particules (16) présente une surface de recouvrement (33) supérieure fermée et un conduit d'écoulement (19) ouvert en dessous, et **en ce que** la surface de recouvrement (33) est pourvue d'une poignée (31).

8. Filtre de rechange selon les revendications 1 à 4 et les revendications 6 et 7, **caractérisé en ce que** la cartouche filtrante (14) peut être accrochée, en formant un espace annulaire extérieur (17), à l'aide d'une suspension (21) dans une bouche d'égout (10), et **en ce qu'**elle est pourvue, dans la zone de sa suspension (21), d'orifices de circulation d'air (20) donnant sur l'espace annulaire extérieur (17).
